# FASCICULE DE BREVET EUROPEEN

(11) **EP 3 261 860 B1**
(45) Date de publication et mention de la délivrance du brevet: **01.04.2020**
(21) Numéro de dépôt: 16713524.3
(22) Date de dépôt: 22.02.2016
(51) Int. Cl.: B60D 1/06, B60D 1/48, B62D 25/20

(54) **SYSTÈME D'ATTELAGE**
ANHÄNGESYSTEM
HITCHING SYSTEM

(30) Priorité: 23.02.2015 FR 1551541
(43) Date de publication de la demande: 03.01.2018
(73) Titulaire: PSA AUTOMOBILES S.A., 78300 Poissy (FR)
(72) Inventeur: MAINGRET, Denis, 70300 Brotte Les Luxeuil (FR)
(74) Mandataire: Fernandez, Francis Lionel
(86) Numéro de dépôt international: PCT/FR2016/050407
(87) Numéro de publication internationale: WO 2016/135405

(56) Documents cités:
- DE-A1-102009 003 474
- NL-C1- 1 029 987

## Description

L'invention a trait au domaine de l'automobile, et plus précisément aux systèmes d'attelage présents sur certains des véhicules automobiles et en particulier un dispositif d'entretoise pour l'adaptation en montage en usine d'un système d'attelage.

Un système d'attelage permet, à un véhicule automobile, de tracter et de transporter des charges telles que des remorques ou des plates-formes. Ce système d'attelage, généralement solidaire de la caisse du véhicule, offre un point d'accroche solide et facile d'accès.

Cependant, le système d'attelage ne peut pas être monté en usine en raison d'une faible tolérance de fixation. L'assemblage du système d'attelage à un véhicule automobile prendrait donc un temps trop important sur une chaine de montage.

Il est connu, pour augmenter la tolérance de montage du système d'attelage, de diviser celui-ci en deux parties indépendantes. Ainsi, le document FR 2 973 735 décrit un ensemble d'attelage comprenant une première partie solidaire de la caisse du véhicule et une deuxième partie solidaire de la première partie, sur laquelle se trouve le point d'accroche. La première partie comprend, dans un premier mode de réalisation, deux bras de liaison chacun fixé à un longeron de la caisse du véhicule automobile et, dans un deuxième mode de réalisation, un bras de liaison fixé à un premier longeron. La deuxième partie comprend, dans le premier mode de réalisation, une traverse fixée perpendiculairement, en chaque extrémité, aux bras de liaison et, dans le deuxième mode de réalisation, une traverse fixée perpendiculairement, en une première extrémité, au bras de liaison et, en une deuxième extrémité, à un deuxième longeron de la caisse du véhicule automobile. Le document DE 10 2009 003 474 A1 divulgue un système d'attelage selon la préambule de la revendication 1I.

Un tel ensemble permet effectivement d'accroître la tolérance au montage du système d'attelage mais cette tolérance est augmentée suivant une seule direction. Un défaut d'alignement des bras de liaison compliquerait fortement le montage d'un tel système. De plus, le nombre de fixations sur la caisse du véhicule automobile est réduit, diminuant la résistance mécanique du système d'attelage.

Un premier objectif est de diminuer le temps de montage d'un système d'attelage afin de permettre un assemblage aisé en usine.

Un deuxième objectif est de proposer un système d'attelage ayant une bonne résistance mécanique.

Un troisième objectif est de proposer un véhicule automobile équipé d'un tel système d'attelage.

A cet effet, il est proposé, en premier lieu, un système d'attelage comprenant :
- deux bras de liaison aptes à être fixés sur les longerons d'une caisse d'un véhicule automobile,
- une traverse comprenant une poutre, reliée à la caisse par lesdits bras;
   dans lequel,
- la traverse comprend à chaque extrémité de la poutre au moins une platine de fixation de ladite traverse sur une platine de fixation d'un bras de liaison par l'intermédiaire d'une entretoise.

De manière avantageuse, on peut ainsi monter d'abord sur la caisse les bras de liaison du système d'attelage puis ultérieurement la traverse sur les bras de liaison à l'aide des entretoises.

Ainsi, le bras de liaison approprié pour être fixé sur un longeron du véhicule présente une platine de fixation destinée à s'étendre transversalement audit longeron. La platine de fixation à l'extrémité de la poutre de la traverse s'étend sensiblement transversalement, de préférence oblique, par rapport à l'axe principal de ladite traverse. La platine de fixation de la traverse s'étend donc dans un plan sensiblement longitudinal par rapport à un véhicule sur lequel le système d'attelage est monté tandis que la platine de fixation du bras de liaison s'étend elle transversalement. La liaison entre la traverse et un bras de liaison est alors assurée par une entretoise présentant une première paroi propre à se fixer sur la platine de fixation de la traverse et une seconde paroi propre à se fixer sur la platine de fixation du bras de liaison, les deux parois de l'entretoise s'étendant donc selon des plans non parallèles puisque les platines de fixation de la traverse et du bras de liaison s'étendent elles aussi dans des plans différents.

Un tel système d'attelage comprend donc deux bras de liaison munis d'un côté incliné apte à être fixé sur une caisse d'un véhicule automobile, d'un côté longitudinal solidaire du côté incliné, et d'un côté transversal, solidaire du côté longitudinal, sensiblement perpendiculaire au côté longitudinal et sensiblement orthogonal au côté incliné ; une traverse munie d'une poutre ; dans lequel, le système d'attelage comprend deux entretoises, munies d'une paroi oblique et d'une paroi transversale solidaire de la paroi oblique ; la traverse comprenant, aux extrémités de la poutre, une première région et une deuxième région munies chacune d'une platine oblique, solidaire de la poutre, et d'un retour transversal, solidaire de la platine, apte à être fixé sur la caisse ; la paroi oblique des entretoises étant solidaire de la platine oblique de la traverse, et la paroi transversale des entretoises étant solidaire du côté transversal des bras de liaison.

Diverses caractéristiques supplémentaires peuvent être prévues, seules ou en combinaison :
- la traverse comprend deux plats formant une chape apte à recevoir une attache ;
- l'attache est montée amovible sur la traverse ;
- la première paroi des entretoises comprend un trou oblong de fixation apte à être aligné avec un perçage de fixation de la platine de fixation de la traverse ;
- un écrou de fixation est soudé sur la platine de fixation de la traverse, de manière coaxiale au perçage de fixation ;
- la seconde paroi des entretoises comprend un trou oblong d'attache apte à être aligné avec un perçage d'attache de la platine de fixation du bras de liaison ;
- la forme oblongue du trou oblong d'attache s'étend suivant une direction différente d'une direction d'extension du trou oblong de fixation ;
- un écrou d'attache est soudé sur la platine de fixation du bras de liaison, de manière coaxiale au perçage d'attache.

Ainsi, de manière avantageuse, l'entretoise est conformée pour permettre un assemblage de la traverse et des bras de liaison permettant un ajustement de l'assemblage traverse/bras de liaison selon deux directions différentes, de préférence selon les axes Y et Z du véhicule portant le système d'attelage. La première partie de l'entretoise est appropriée pour être fixée sur la platine de fixation de la traverse en permettant un rattrapage de jeu selon un axe correspondant à l'axe Z du véhicule tandis que la seconde partie de l'entretoise est appropriée pour permettre un rattrapage de jeu selon un axe correspondant à l'axe Y du véhicule. Il est ainsi possible de monter les bras de liaison à une première étape d'assemblage puis de fixer ensuite la traverse, grâce à l'entretoise malgré les dispersions en Y et en Z entre les parties de l'attelage.

Selon une forme de réalisation préférée, la traverse comporte en outre une platine de fixation sur la caisse du véhicule. Cette platine s'étend à l'extrémité de la traverse et est appropriée pour venir se fixer contre une paroi transversale arrière du soubassement du véhicule.

Il est proposé, en deuxième lieu, un véhicule automobile équipé d'un système d'attelage tel que présenté ci-dessus.

Il est proposé, en troisième lieu, un procédé de montage d'un système d'attelage tel que présenté ci-dessus, ce procédé comprenant une étape consistant à fixer un bras de liaison du système d'attelage à des longerons d'une caisse d'un véhicule automobile, puis la fixation d'une traverse entre les bras de liaison, ce procédé comprenant également l'étape suivante :
- fixer la traverse du système d'attelage aux bras de liaison par l'intermédiaire d'une entretoise.

Le procédé selon l'invention permet de monter l'entretoise après le montage sur la caisse des autres éléments de l'attelage afin d'en effectuer la connexion rigide.

Le procédé comprend une étape consistant à fixer un côté incliné de bras de liaison du système d'attelage à des longerons d'une caisse d'un véhicule automobile, ce procédé comprenant également les étapes suivantes :
- fixer un retour transversal d'une traverse du système d'attelage à une partie arrière de la caisse du véhicule automobile, et
- fixer une paroi oblique et une paroi transversale d'entretoises respectivement à des platines obliques de la traverse et à un côté transversal des bras de liaison.

D'autres objets et avantages de l'invention apparaîtront à la lumière de la description d'un mode de réalisation, faite ci-après en référence aux dessins annexés dans lesquels :
- la figure 1 est une vue schématique en perspective montrant l'arrière d'un véhicule automobile comprenant une caisse et d'un système d'attelage monté sur la caisse ;
- la figure 2 est une vue éclatée représentant la caisse et le système d'attelage ;
- la figure 3 est une vue en perspective du système d'attelage ;
- la figure 4 est une vue éclatée d'un détail du système d'attelage, et
- la figure 5 est une vue en perspective de la caisse du véhicule automobile.

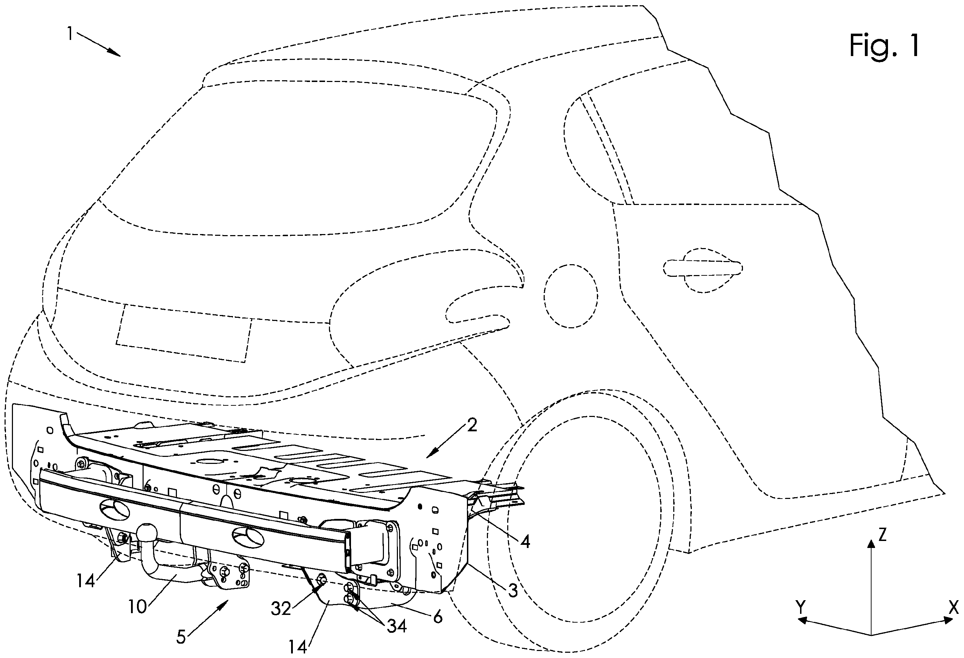

Sur la figure 1 est représenté l'arrière d'un véhicule 1 automobile comprenant une caisse 2 munie d'une partie 3 arrière et de deux longerons 4 sur lesquels est monté un système 5 d'attelage.

On définit par rapport au véhicule 1 un repère orthogonal XYZ comprenant trois axes perpendiculaires deux à deux, à savoir :
- un axe X, définissant une direction longitudinale, horizontale, confondue avec la direction générale de déplacement du véhicule 1 ;
- un axe Y, définissant une direction transversale, horizontale, qui avec l'axe X définit un plan XY horizontal, et
- un axe Z, définissant une direction verticale, perpendiculaire au plan XY horizontal.

Dans la suite de ce texte, on définit par le terme :
- longitudinal, toute pièce ou partie d'une pièce parallèle à un plan XZ ;
- transversal, toute pièce ou partie d'une pièce parallèle à un plan YZ ;
- incliné, toute pièce ou partie d'une pièce orthogonale au plan YZ et non orthogonale au plan XY et au plan XZ ;
- oblique, toute pièce ou partie d'une pièce orthogonale au plan XY et non orthogonale au plan XZ et au plan YZ.

Dans la description ci-dessous, le système 5 d'attelage est décrit assemblé au véhicule 1.

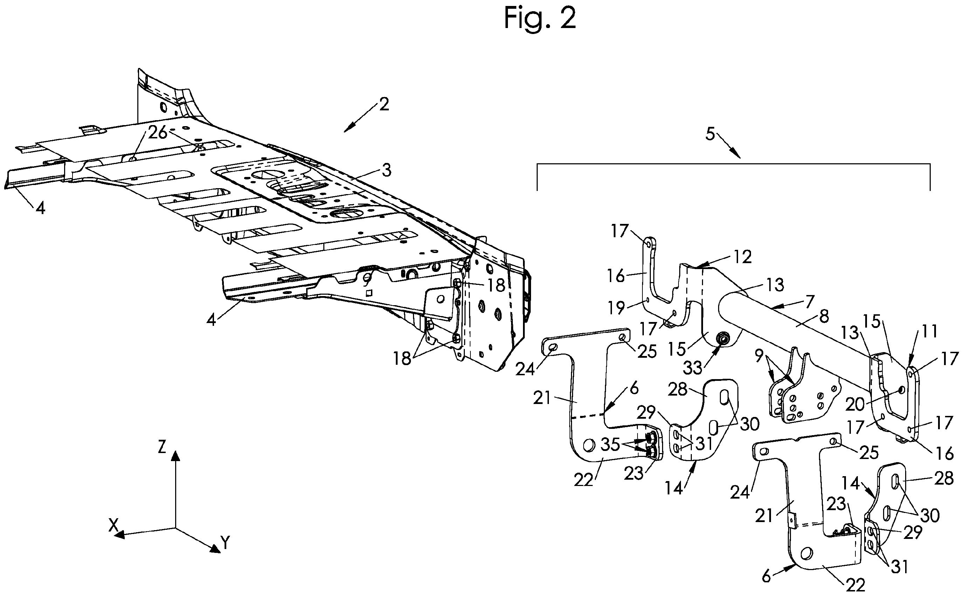

Sur la figure 2 est illustré le système 5 d'attelage qui comprend deux bras 6 de liaison aptes à être fixés aux longerons 4 de la caisse 2. Ces bras de liaison 6 s'étendent selon le même axe longitudinal que les longerons 4 dans le plan XZ. Le système 5 d'attelage comprend également une traverse 7 apte à être fixée sur les bras de liaison 6 et à la partie 3 arrière de la caisse 2, transversalement à celle-ci selon l'axe Y du véhicule. La traverse 7 comprend une poutre 8 munie, en son centre, de deux plats 9 formant une chape, aptes à recevoir une attache 10 amovible.

La traverse 7 est pourvue d'une zone de fixation 11, 12 à chacune des extrémités 13 de la poutre 8.

Les bras 6 de liaison sont respectivement reliés à une zone de fixation 11, 12 par l'intermédiaire d'une entretoise 14.

Une zone de fixation 11, 12 de la traverse 7 comprend une platine 15 solidaire de la poutre 8 et s'étendant transversalement à l'axe principal la traverse, de préférence de manière oblique par rapport à celle-ci. Une extrémité de la platine 15 sert à la fixation sur un bras de liaison 6 par l'intermédiaire d'une entretoise 14 et l'extrémité opposée de la platine 15 porte une seconde platine de fixation 16 s'étendant principalement dans un plan YZ. La platine 15 s'étend de manière oblique vers un plan médian de la traverse 7.

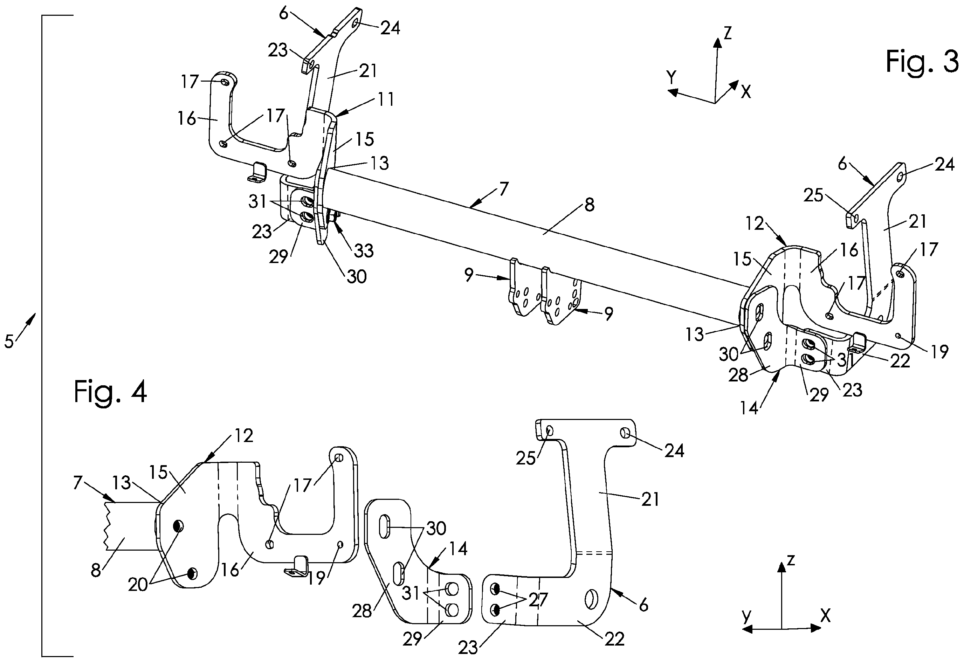

La traverse 7, représentée sur les figures 3 et 4, est symétrique par rapport à un plan médian parallèle au plan XZ, à l'exception des platines 16 transversales.

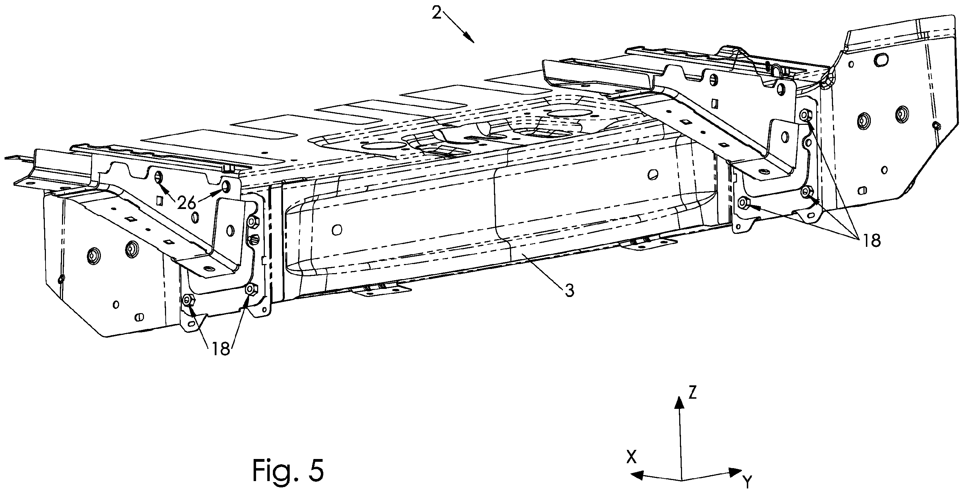

Une platine de fixation 16 de la première zone 11 comprend trois perçages 17 oblongs de connexion qui s'étendent sensiblement suivant l'axe X et dont la plus grande longueur de la forme oblongue s'étend sensiblement suivant l'axe Y, ces perçages 17 étant aptes à être alignés avec des lumières 18 de connexion de la partie 3 arrière de la caisse 2, représentée sur la figure 5.

La platine de fixation 16 transversale de la seconde zone 12 comprend deux perçages 17 oblongs de connexion qui s'étendent sensiblement suivant l'axe X et dont la plus grande longueur de la forme oblongue s'étend sensiblement suivant l'axe Y, et un perçage 19 de connexion qui s'étend sensiblement suivant l'axe X, aptes à être alignés avec les lumières 18 de connexion.

Les platines 15 obliques des zones de fixation 11, 12 de la traverse 7 comprennent deux perçages 20 de fixation qui s'étendent sensiblement perpendiculairement aux platines 15 obliques.

Le bras 6 de liaison présente une forme sensiblement en J à savoir une partie principale 21 destinée à être fixée sur le longeron 4 de manière à s'étendre principalement selon l'axe Z du véhicule et dans un plan XZ, puis une partie recourbée 22 de manière à s'étendre longitudinalement selon l'axe X du véhicule, sous la partie arrière 3 de la caisse 2 et vers l'arrière dudit véhicule, cette partie 22 s'étendant dans un plan non parallèle au plan XZ. La partie d'extrémité 23 dudit bras 6 constituant la platine de fixation du bras de liaison 6 est repliée de manière à s'étendre transversalement au véhicule, dans le plan YZ principalement, selon l'axe Y et en direction de l'axe X médian de la caisse. La partie 23 est ainsi sensiblement perpendiculaire à la partie 22 longitudinale et sensiblement orthogonale à la partie 21.

La partie 21 comprend un perçage 24 oblong de liaison qui s'étend sensiblement perpendiculairement à la partie 21 et dont la plus grande longueur de la forme oblongue s'étend sensiblement suivant l'axe X, et un perçage 25 de liaison, ces perçages aptes à être alignés avec des lumières 26 de liaison du longeron 4 de la caisse 2. La partie 23 d'extrémité comprend deux perçages 27 d'attache qui s'étendent sensiblement suivant l'axe X.

La première paroi 28 est destinée à venir se fixer sur la platine de fixation 15 de la traverse 7 et la seconde paroi 29 est destinée à venir se fixer sur la partie d'extrémité 23 du bras de liaison 6. Cette partie d'extrémité forme la platine de fixation 23 du bras de liaison 6. L'entretoise 14 une fois montée comprend une paroi 28 oblique et une paroi 29 transversale, solidaire de la paroi 28 oblique. L'entretoise 14 comprend ainsi une première paroi 28 et une seconde paroi 29 formant un angle entre elles, de préférence supérieur à 90°.

La première paroi oblique 28 comprend deux trous 30 oblongs de fixation et dont la plus grande longueur de la forme oblongue s'étend sensiblement suivant l'axe Z, aptes à être alignés avec les perçages 20 de fixation des platines 15 obliques de la traverse 7.

La seconde paroi transversale 29 comprend deux trous 31 oblongs d'attache qui s'étendent sensiblement suivant l'axe X et dont la plus grande longueur de la forme oblongue s'étend sensiblement suivant l'axe Y, aptes à être alignés avec les perçages 27 d'attache des parties d'extrémité 23 des bras 6 de liaison.

Des boulons formés d'une vis et d'un écrou assurent le maintien :
- De la platine 16 transversale de la traverse 7 à la partie 3 arrière de la caisse ;
- des platines 15 obliques de la traverse 7 à la première paroi 28 des entretoises 14 ;
- de la seconde paroi 29 transversale des entretoises 14 à la partie d'extrémité 23 transversale des bras 6 de liaison, et
- de la partie 21 des bras 6 de liaison aux longerons 4.

En particulier, les platines 15 obliques de la traverse 7 sont solidarisées à la paroi 28 oblique des entretoises 14 par des boulons 32 de fixation, ces boulons 32 de fixation comprennent chacun un écrou 33 de fixation soudé aux platines 15 obliques de la traverse 7 de manière coaxiale aux perçages 20 de fixation. Ces écrous soudés ne nécessitent pas de contre serrage.

La partie d'extrémité ou platine de fixation 23 transversale des bras 6 de liaison est solidarisée à la paroi 29 transversale des entretoises 14 par des boulons 34 d'attache, ces boulons 34 d'attache comprennent chacun un écrou 35 d'attache soudé à la partie 23 transversale des bras 6 de liaison de manière coaxiale aux perçages 27 d'attache.

Lors d'un montage en usine du système 5 d'attelage, un premier poste de montage est chargé d'assembler les bras 6 de liaison aux longerons 4 de la caisse 2. La forme oblongue du perçage 24 oblong de liaison permet un alignement rapide et précis de ceux-ci et du perçage 25 de liaison, appartenant au bras 6 de liaison, avec les lumières 26 de liaison du longeron 4.

Un second poste de montage est chargé d'assembler la traverse 7 à la partie 3 arrière de la caisse 2. La forme oblongue des perçages 17 oblongs de connexion permet un alignement rapide et précis de ceux-ci et du perçage 19 de connexion, appartenant à la première région 11 et à la deuxième région 12 de la traverse 7, avec les lumières 18 de connexion de la partie 3 arrière.

Les entretoises 14 sont finalement assemblées, solidarisant la traverse 7 et les bras 6 de liaison. La forme oblongue des trous 30 oblongs de fixation et des trous 31 oblongs d'attache permet un alignement rapide et précis de ceux-ci avec respectivement les perçages 20 de fixation des platines 15 obliques de la traverse 7, et les perçages 27 d'attache des bras 6 de liaison. Ces trous oblongs 31 permettent de récupérer les dispersions en Y et les trous oblongs 30 en Z et l'assemblage des deux parties de l'attelage.

Les écrous 35 d'attache, soudés aux bras 6 de liaison, ainsi que les écrous 33 de fixation, soudés aux platines 15 obliques de la traverse 7, permettent également de réduire le temps de montage du système 5 d'attelage.

## Revendications

1. Système d'attelage (5) comprenant :
- deux bras de liaison (6) aptes à être fixés sur les longerons (4) d'une caisse d'un véhicule automobile,
- une traverse (7) comprenant une poutre (8), reliée à la caisse par lesdits bras;
la traverse (7) comprenant à chaque extrémité de la poutre (8) au moins une platine de fixation (15) de ladite traverse (7) sur une platine de fixation (23) d'un bras de liaison (6) par l'intermédiaire d'une entretoise (14), tel que la traverse (7) comporte en outre une seconde platine de fixation (16) s'étendant à l'extrémité de la traverse (7) et appropriée pour venir se fixer contre une paroi transversale arrière du soubassement d'un véhicule, **caractérisé en ce qu'**une extrémité de la platine (15) constituant la platine de fixation sur le bras de liaison (6) par l'intermédiaire d'une entretoise (14) et l'extrémité opposée de la platine (15) portant la seconde platine de fixation (16) s'étendant principalement parallèlement à l'axe principal de la traverse (7).

2. Système d'attelage (**5**) selon la revendication 1, **caractérisé en ce que** la platine de fixation (23) du bras de liaison (6) est destinée à s'étendre transversalement audit longeron (4).

3. Système d'attelage (5) selon l'une des revendications 1 et 2, **caractérisé en ce que** la platine de fixation (15) à l'extrémité de la poutre (8) de la traverse (7) s'étend sensiblement transversalement, par rapport à l'axe principal de ladite traverse (7).

4. Système d'attelage (5) selon l'une des revendications 1 à 3, **caractérisé en ce que** l'entretoise (14) présente une première paroi (28) propre à se fixer sur la platine de fixation (15) de la traverse (7) et une seconde paroi (29) propre à se fixer sur la platine de fixation (23) du bras de liaison (6).

5. Système (5) d'attelage selon la revendication 4, **caractérisé en ce que** la première paroi (28) des entretoises (14) comprend un trou (30) oblong de fixation apte à être aligné avec un perçage (20) de fixation de la platine (15) de la traverse (7).

6. Système (5) d'attelage selon l'une des revendications 4 et 5, **caractérisé en ce que** la seconde paroi (29) des entretoises (14) comprend un trou (31) oblong d'attache apte à être aligné avec un perçage (27) d'attache de la platine de fixation (23) du bras (6) de liaison.

7. Système (5) d'attelage selon la revendication 6, **caractérisé en ce que** la forme oblongue du trou (31) oblong d'attache s'étend suivant une direction différente d'une direction d'extension du trou (30) oblong de fixation.

8. Système (5) d'attelage selon l'une des revendications précédentes, **caractérisé en ce que** la traverse (7) comprend deux plats (9) formant une chape apte à recevoir une attache (10).

9. Véhicule (1) automobile équipé d'un système (5) d'attelage selon l'une quelconque des revendications précédentes.

10. Procédé de montage d'un système (5) d'attelage selon l'une quelconque des revendications 1 à 8, le procédé comprenant une étape consistant à fixer un bras de liaison du système d'attelage à chaque longeron d'une caisse d'un véhicule automobile, puis la fixation d'une traverse entre les bras de liaison, ce procédé comprenant également l'étape suivante :
- fixer la traverse du système d'attelage aux bras de liaison par l'intermédiaire d'une entretoise.

## Patentansprüche

1. Anhängesystem (5), das Folgendes umfasst:
- zwei Verbindungsarme (6), die geeignet sind, auf den Längsträgern (4) einer Kraftfahrzeugkarosserie befestigt zu sein,
- einen Querträger (7), der einen Balken (8) umfasst, der mit der Karosserie durch die Arme verbunden ist;
wobei der Querträger (7) an jedem Ende des Balkens (8) mindestens eine Befestigungsplatte (15) des Balkens (7) auf einer Befestigungsplatte (23) eines Verbindungsarms (6) über einen Abstandhalter (14) umfasst, so dass der Querträger (7) außerdem eine zweite Befestigungsplatte (16) umfasst, die sich an dem Ende des Querträgers (7) erstreckt und geeignet ist, an einer hinteren Querwand des Unterbaus des Fahrzeugs befestigt zu werden, **dadurch gekennzeichnet, dass** sich ein Ende der Platte (15), das die Befestigungsplatte auf dem Verbindungsarm (6) über einen Abstandhalter (14) bildet, und das entgegengesetzte Ende der Platte (15), das die zweite Befestigungsplatte (16) trägt, hauptsächlich parallel zu der Hauptachse des Querträgers (7) erstrecken.

2. Anhängesystem (5) nach Anspruch 1, **dadurch gekennzeichnet, dass** die Befestigungsplatte (23) des Verbindungsarms (6) dazu bestimmt ist, sich quer zu dem Längsträger (4) zu erstrecken.

3. Anhängesystem (5) nach einem der Ansprüche 1 und 2, **dadurch gekennzeichnet, dass** sich die Befestigungsplatte (15) an dem Ende des Balkens (8) des Querträgers (7) im Wesentlichen quer in Bezug auf die Hauptachse des Querträgers (7) erstreckt.

4. Anhängesystem (5) nach einem der Ansprüche 1 bis 3, **dadurch gekennzeichnet, dass** der Abstandhalter (14) eine erste Wand (28) aufweist, die geeignet ist, auf der Befestigungsplatte (15) des Querträgers (7) befestigt zu sein, und eine zweite Wand (29), die geeignet ist, auf der Befestigungsplatte (23) des Verbindungsarms (6) befestigt zu sein.

5. Anhängesystem (5) nach Anspruch 4, **dadurch gekennzeichnet, dass** die erste Wand (28) der Abstandhalter (14) ein längliches Befestigungsloch (30) umfasst, das geeignet ist, mit einer Befestigungsbohrungen (20) der Platte (15) des Querträgers (7) ausgerichtet zu sein.

6. Anhängesystem (5) nach einem der Ansprüche 4 und 5, **dadurch gekennzeichnet, dass** die zweite Wand (29) der Abstandhalter (14) ein längliches Anbringeloch (31) umfasst, das geeignet ist, mit einer Anbringebohrung (27) der Befestigungsplatte (23) des Verbindungsarms (6) ausgerichtet zu sein.

7. Anhängesystem (5) nach Anspruch 6, **dadurch gekennzeichnet, dass** sich die längliche Form des länglichen Anhängelochs (31) entlang einer Richtung erstreckt, die von einer Ausdehnungsrichtung des länglichen Befestigungslochs (30) unterschiedlich ist.

8. Anhängesystem (5) nach einem der vorstehenden Ansprüche, **dadurch gekennzeichnet, dass** der Querträger (7) zwei Flachteile (9) umfasst, die eine Gabel bilden, die geeignet ist, ein Anbringelement (10) aufzunehmen.

9. Kraftfahrzeug (1), das mit einem Anhängesystem (5) nach einem der vorstehenden Ansprüche ausgestattet ist.

10. Verfahren zur Montage eines Anhängesystems (5) nach einem der Ansprüche 1 bis 8, wobei das Verfahren einen Schritt umfasst, der darin besteht, einen Verbindungsarm des Anhängesystems an jedem Längsträger einer Kraftfahrzeugkarosserie zu befestigen, dann die Befestigung eines Querträgers zwischen den Verbindungsarmen, wobei das Verfahren auch den folgenden Schritte umfasst:
- Befestigen des Querträgers des Anhängesystems an den Verbindungsarmen anhand eines Abstandhalters.

## Claims

1. A hitching system (5) including:
- two connection arms (6) able to be attached to the side members (4) of a body of a motor vehicle,
- a cross member (7) including a beam (8), connected to the body by said arms;
the cross member (7) including at each end of the beam (8) at least one plate (15) for attaching said cross member (7) to an attachment plate (23) of a connection arm (6) by means of a spacer (14), such that the cross member (7) further comprises a second attachment plate (16) extending at the end of the cross member (7) and suitable for coming to be attached against a transverse rear wall of the underbody of a vehicle, **characterized in that** an end of the plate (15) constituting the attachment plate on the connection arm (6) by means of a spacer (14) and the opposite end of the plate (15) bearing the second attachment plate (16) extending principally parallel to the principal axis of the cross member (7).

2. The hitching system (5) according to Claim 1, **characterized in that** the attachment plate (23) of the connection arm (6) is intended to extend transversely to said side member (4).

3. The hitching system (5) according to one of Claims 1 and 2, **characterized in that** the attachment plate (15) at the end of the beam (8) of the cross member (7) extends substantially transversely, with respect to the principal axis of said cross member (7).

4. The hitching system (5) according to one of Claims 1 to 3, **characterized in that** the spacer (14) presents a first wall (28) suitable to be attached to the attachment plate (15) of the cross member (7), and a second wall (29) suitable to be attached to the attachment plate (23) of the connection arm (6).

5. The hitching system (5) according to Claim 4, **characterized in that** the first wall (28) of the spacers (14) includes an oblong attachment hole (30) able to be aligned with an attachment bore (20) of the plate (15) of the cross member (7).

6. The hitching system (5) according to one of Claims 4 and 5, **characterized in that** the second wall (29) of the spacers (14) includes an oblong attachment hole (31) able to be aligned with an attachment bore (27) of the attachment plate (23) of the connection arm (6) .

7. The hitching system (5) according to Claim 6, **characterized in that** the oblong shape of the oblong attachment hole (31) extends along a different direction from an extension direction of the oblong attachment hole (30).

8. The hitching system (5) according to one of the preceding claims, **characterized in that** the cross member (7) includes two flat surfaces (9) forming a yoke able to receive a fastener (10).

9. A motor vehicle (1) equipped with a hitching system (5) according to any one of the preceding claims.

10. A method for mounting a hitching system (5) according to any one of Claims 1 to 8, the method including a step consisting of attaching a connection arm of the hitching system to each side member of a body of a motor vehicle, then the attaching of a cross member between the connection arms, this method also including the following step:
- attaching the cross member of the hitching system to the connection arms by means of a spacer.
